Europäisches Patentamt

European Patent Office

Office européen des brevets

(11) Publication number: 0 360 311
A1

## EUROPEAN PATENT APPLICATION

(21) Application number: 89202140.3

(22) Date of filing: 24.08.89

(51) Int. Cl.5: C08G 69/44 , C08G 69/40

(30) Priority: 30.08.88 NL 8802131

(43) Date of publication of application:
28.03.90 Bulletin 90/13

(84) Designated Contracting States:
AT BE CH DE ES FR GB IT LI NL SE

(71) Applicant: STAMICARBON B.V.
Mijnweg 1
NL-6167 AC Geleen(NL)

(72) Inventor: Gaymans, Reinoud Jaap
Keizerweg 25
NL-7548 PX Enschede(NL)
Inventor: Roerdink, Eize
Beatrixlaan 19
NL-6165 CW Geleen(NL)
Inventor: Schwering, Petrus Johannes
Franciscus
Hengelosestraat 12D
NL-7572 BP Oldenzaal(NL)
Inventor: Walch, Eric
Leydscheweg 42
NL-7533 VL Enschede(NL)

(54) Thermoplastic elastomer.

(57) The invention relates to a thermoplastic elastomer with polyether segments and polyamide segments, tetramethylene adipamide units forming the polyamide segments. The thermoplastic elastomers according to the invention can be used at a high temperature and possess constant rigidity above room temperature.

Fig.1

# THERMOPLASTIC ELASTOMER

The invention relates to thermoplastic elastomers in which polyamide units form the thermoplastic polymer segments and polyether units the rubber segments.

Such thermoplastic elastomers are known from EP-A-0.025.828. This publication discloses several of these block copolymers and methods for preparing them. Various of these thermoplastic elastomers are commercially available under several names. Examples are Arnitel A550[(R)], a segmented block copolymer with polyamide-6 and polypropylene oxide segments, and Pebax 55D[(R)], a segmented block copolyamide with polyamide-6 and polytetrahydrofuran (polytetramethylene oxide) segments.

An important aspect for the composition of these block copolymers is that several phases are present, with at least one phase that has a low $T_g$, glass transition temperature, and one phase that has crystallized and has a high melting temperature, $T_m$. As a result, these materials have a low modulus and good dimensional stability in the temperature range between the low $T_g$ and the high $T_m$. The melts of these materials can suitably be processed at temperatures higher than the high $T_m$, and in doing so short cycle times can be realized on account of the crystallization taking place upon cooling.

The properties of these systems are determined by the molecular structure of the polymer and the manner of phase separation. Thus, the length of the crystallizing blocks affects both the melt behaviour and the degree of order. The block length of the segments that can be applied in practice is in part determined by the fact that long blocks produce phase separation even before the segmented block copolymer has been formed. This gives rise to the formation of areas that are rich in rubber, which are readily attacked by solvent.

It has now been found possible to obtain thermoplastic elastomers with polyether-rubber segments and polyamide segments having good processing properties, constant rigidity over a large tem perature range and good chemical resistance at a relatively high rubber segment content. The modulus level can be controlled on the basis of the composition.

The thermoplastic elastomer consisting of a segmented block copolymer with polyamide and polyether segments according to the invention is characterized in that the polyamide segments are formed by tetramethylene adipamide units.

The ratio between tetramethylene adipamide and rubber units may vary within very wide limits. The tetramethylene adipamide content must at least be so high that the polyamide segments on average contain at least 2 tetramethylene adipamide units. At lower contents the melting point, and thus the temperature of application, decreases to below 200ºC and, owing to the low crystallinity and crystallization rate, processing is very difficult. Depending on the length of the rubber segments, this means that the tetramethylene adipamide content, for instance, is at least about 30 wt.% at an equivalent weight of the rubber segments of 1100 and about 40 wt.% at an equivalent weight of 700.

To have a significant effect on the elastic properties, the rubber segments content is at least 5 wt.%, preferably at least 10 wt.%.

By preference the ratio between the polyamide units and the polyether units is chosen such that the polyamide segments comprise at least about 3 tetramethylene adipamide units. In that case the melting point of the copolymer will approach that of polytetramethylene adipamide, about 290ºC, and a thermoplastic elastomer is obtained that can be applied at a temperature that is about 50ºC higher than that of the products that are now current. Depending on the equivalent weight of the rubber segments, the preferred content of tetramethylene adipamide units for instance is at least about 50 and 60 wt.% for, respectively, M = about 1100 and 700 for the rubber segments. Most preferred are segmented copolymers in which the equivalent weight of the rubber segments is less than about 800.

The rubber segments with polyether units may be derived from polyoxyalkanes, for instance polyoxypropylene or polyoxytetra methylene. The segmented copolymers then obtained have a very good processability and can be injection moulded with short cycle times.

The polyetheramide according to the invention can be prepared by various processes known in themselves, for instance by solution or melt polymerization. A very suitable process is the one starting from the salt for polyamide 4.6, adipic acid and amine-terminated polyether, in which a prepolymer is obtained in a first step by solution polymerization in pyrrolidone or another suitable solvent. After washing with water, this prepolymer is post-condensed in the solid phase at about 250-260ºC in an inert gas atmosphere. If desired after extraction with ethanol, then a high-molecular copolymer with excellent properties is obtained.

Thermoplastic elastomers according to the invention are applied in the production of, among others, profiles and seals.

The invention will be further elucidated with reference to the following examples, without necessarily be restricted thereto.

## Example and comparative example

A number of segmented copolymers of polytetramethylene adipamide and polytetramethylene oxide or polypropylene oxide were prepared by the process described below. Different amide : ether weight ratios were applied and the equivalent weight of the polyether segments was varied. The polymers were processed into compression-moulded specimens at a temperature 20⌑C higher than the melting point, and these specimens were subjected to torsion damping measurements.

## Starting materials used

Polyamide 4.6 salt, pH = 7.8 .
Bis-(3-aminopropyl)-polytetramethylene oxide, M = 1130 and M = 794,
from BASF, W. Germany (PTMOx)
Amine-terminated polypropylene oxide. Jeffamine D-400ϕ and D-2000ϕ, from Texaco, USA, with, respectively, M = 430 and M = 2090 (PPOx)
Adipic acid, AR, from Merck, W. Germany
Pyrrolidone, AR, from Merck, W. Germany
m-Cresol, AR, from Merck, W. Germany.

## Determination

$\eta_{inh}$ in 1% solution in m-cresol at 25⌑C.
Torsion damping with a Myrenne torsion balance on specimens with as dimensions w = 5-10 mm, ! = 50 mm, t = 1-2.5 mm, at approx. 1 Hz over a temperature range from -140⌑C to 270⌑C and a heating rate of 1⌑C/min. The bars were dried for 48 hours in a vacuum oven at 110⌑C.
Injection moulding: on an Arburg Allrounder, melt temperature about 300⌑C, mould temperature 60⌑C, after-pressure 30 bar. The material was dried for 48 hours in a vacuum oven at 110⌑C.

## Polymer preparation process:

I Prepolymerization:
nylon salt (pH = 7.8), adipic acid and PTHF or PPOx and the solvent pyrrolidone (approx. 1 ml/g starting material) were heated to 200-210⌑C in a closed autoclave at 5 bar feed pressure while being stirred. This temperature was maintained for 30 minutes, after which the pressure was relieved. The prepolymer formed was washed with water for solvent removal.
II Prepolymerization as under I, now in m-cresol. After pressure relieving the temperature was raised to 250⌑C and the solvent evaporated during 1 hour. After cooling the prepolymer was obtained. The product obtained did not exhibit the slight discolouring of that under I.
III instead of nylon 4.6 salt high-molecular polyamide 4.6 was used ($\eta_{rel}$ = 3.2). The reaction mixture was heated for 1 hour at 210⌑C and 1 bar. The autoclave was subsequently closed and the temperature raised to 250⌑C. After 1 hour the pressure was relieved and subsequently after one hour the solvent (m-cresol) was evaporated. After cooling the prepolymer was obtained.

## Post-condensation:

The prepolymer was subjected to post-condensation in a tumble drier at a temperature of 250-260⌑C for a longer period of time (see Tables I and II).

## TABLE I

| Polyetheramide block copolymers with polytetramethylene oxide | | | | | | | |
|---|---|---|---|---|---|---|---|
| No. | prepolymerization method | PA 4.6 + adipic acid wt. % | PTMO | | postcondensation (hours) | $\eta_{inh}$ (dl/g) | extractability, wt. % |
| | | | M = | | | | |
| | | | 794 | 1130 | | | |
| 1a | | 48 | | + | 0 | 0.32 | 50 |
| 1 | I | 48 | | + | 2.5 | 0.75 | -- |
| 2 | I | 48 | | + | 5 | 0.94 | -- |
| 3 | I | 48 | | + | 16 | 1.21 | 28 |
| 4 | I | 48 | | + | 29 | 1.31 | 27 |
| 5 | I | 77 | | + | 5 | 1.10 | 8 |
| 6 | I | 35 | | + | 20 | 1.20 | 38 |
| 7 | I | 49 | + | | 20 | 1.20 | 5 |
| 8 | I | 35 | + | | 20 | | 26 |
| 9 | I | 25 | + | | 20 | | 34 |
| 19 | *) | 35 | + | | 1 | 0.57 | 54 |
| 20 | *) | 75 | + | | 1 | | 15 |

*) no solvent, 5% water (melt polymerization)

## TABLE II

| Polyetheramide block copolymers with polypropylene oxide | | | | | | | |
|---|---|---|---|---|---|---|---|
| No. | prepolymerization method | PA 4.6 + adipic acid wt. % | PTMO | | postcondensation (hours) | $\eta_{inh}$ (dl/g) | extractability, wt. % |
| | | | M = | | | | |
| | | | 794 | 1130 | | | |
| 10 | II | 74 | + | | 22 | 0.76 | 4 |
| 11 | II | 53 | + | | 22 | 0.73 | 24.4 |
| 12 | III | 48 | + | | 22 | 1.75 (0.53)*) | 13.3 |
| 13 | II | 42 | + | | 22 | 0.54 | 74.2 |
| 14 | III | 37 | + | | 22 | 0.52 | |
| 15 | II | 36 | + | | 22 | 0.47 | |
| 16 | I | 72 | | + | 22 | 0.52 | 7.5 |
| 17 | II | 47 | | + | 22 | 0.57 | 33.1 |
| 18 | II | 25 | | + | 22 | 0.54 | 69.1 |

*) duplicate experiment

The good processing behaviour of the block copolymers according to the invention follows, inter alia, from the slight difference between the melting point and the crystallization temperature measured with a Perkin Elmer DSC-II (differential scanning calorimeter) with a heating and cooling rate of 20°C/min. For the melting point the peak maximum of the second heating cycle has been used.

TABLE III

| block copolymer No. | $T_m$ ($^\circ$C) | $T_{cr}$ ($^\circ$C) |
|---|---|---|
| PA 4.6 | 289 | 257 |
| 5 | 270 | 233 |
| 3 | 268 | 231 |
| 6 | 258 | 217 |
| 7 | 265 | 227 |
| 3a* | 269 | 234 |

* 3a is polymer 3 after extraction with ethanol. This polymer then contains 66 wt. % PA units and no extractable residue.

The crystallization rate of the block copolymers therefore is in the order of magnitude of that of polyamide 4.6 homopolymer. As a consequence, no problems were experienced in injection moulding test bars from block copolymer 5 using cycle times, chosen at random, of approx. 40 seconds.

As the melting point of the block copolymers according to the invention remains at a high level even for compositions with 65% polyether segments, the polyether amides according to the invention can be applied at higher temperatures than the products currently used.

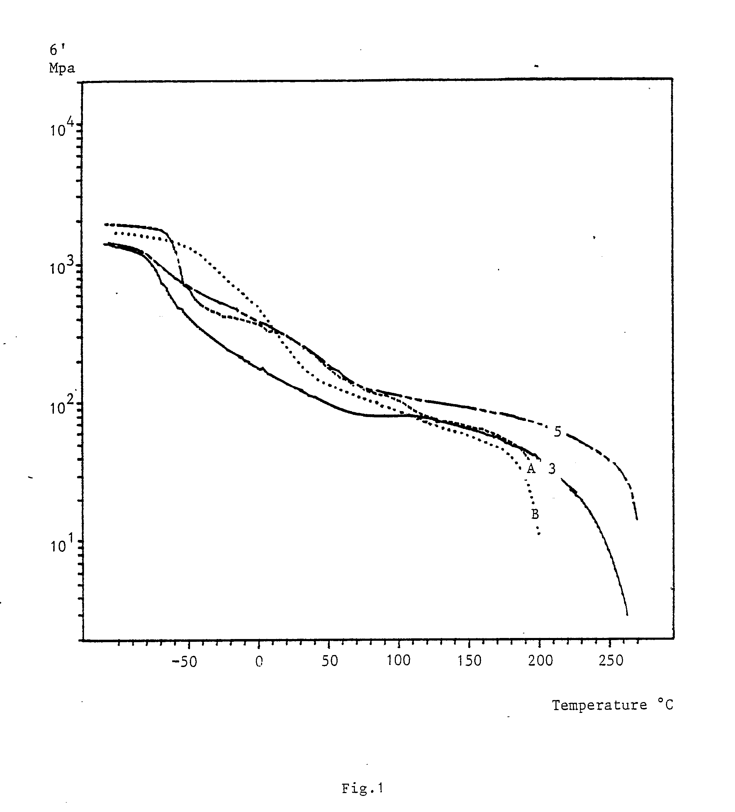

Of a number of synthesized copolymers the modulus of rigidity, torsion pendulum modulus $G'$ was determined and compared with the corresponding values of several commercial products. Figure 1. Curves 3 and 5 correspond to examples 3 and 5 from Table 1. A and B are, respectively, Arnitel A550 from Akzo, the Netherlands, and Pebax 55D from ATO-Chemie, of France.

It is found that in the temperature range above room temperature, the block copolymers according to the invention exhibit a relatively constant modulus, in contrast with the state-of-the-art block copolymers. The maximum temperature at which they can be used is significantly higher.

## Claims

1. Thermoplastic elastomer comprising a segmented block copolymer with polyamide and rubbery polyether segments, characterized in that tetramethylene adipamide units form the polyamide segments.

2. Thermoplastic elastomer according to claim 1, characterized in that the polyamide segments contain at least 2 tetramethylene adipamide units per segment.

3. Thermoplastic elastomer according to claim 2, characterized in that the polyamide segments contain at least 3 tetramethylene adipamide units per segment.

4. Thermoplastic elastomer according to any one of the claims 1-3, characterized in that the polyether segments have an equivalent weight of less than 800.

5. Thermoplastic elastomer according to any one of claims 1-4, characterized in that the polyether segment is derived from polytetramethylene oxide or polypropylene oxide.

6. Object obtained by application of the thermoplastic elastomer according to any one of claims 1-4.

7. Thermoplastic elastomer as substantially described in the specification and examples.

Fig.1

European Patent Office

EUROPEAN SEARCH REPORT

Application Number

EP 89 20 2140

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | EP-A-0 025 828 (HÜLS) --- | | C 08 G 69/44 |
| A | EP-A-0 095 893 (TORAY) --- | | C 08 G 69/40 |
| A | EP-A-0 156 035 (SNIA) ----- | | |

TECHNICAL FIELDS
SEARCHED (Int. Cl.5)

C 08 G

The present search report has been drawn up for all claims

| Place of search | Date of completion of the search | Examiner |
|---|---|---|
| THE HAGUE | 11-12-1989 | LEROY ALAIN |